# EUROPEAN PATENT SPECIFICATION

(11) **EP 4 565 782 B1**
(45) Date of publication and mention of the grant of the patent: **23.09.2026**
(21) Application number: 23751292.6
(22) Date of filing: 01.08.2023
(51) Int. Cl.: F03B 17/06, F03D 5/06

(54) **POWER GENERATOR**
STROMGENERATOR
GÉNÉRATEUR ÉLECTRIQUE

(30) Priority: 03.08.2022 IE S20220128
(43) Date of publication of application: 11.06.2025
(73) Proprietor: Peyton, Ciaran, Arklow, Wicklow Y14XD85 (IE)
(72) Inventor: Peyton, Ciaran, Arklow, Wicklow Y14XD85 (IE)
(74) Representative: Gillespie, Richard
(86) International application number: PCT/EP2023/071261
(87) International publication number: WO 2024/028306

(56) References cited:
- US-A- 4 354 803
- US-A1- 2009 285 668
- US-B2- 9 303 624

## Description

### Field

The present application is directed towards an improved foil power generator. The term foil as used in this disclosure refers to structure shaped to produce kinetic energy when placed in a moving fluid (e.g. air, water etc.). In this disclosure, a sail is considered to be a type of foil. A hydrofoil refers to a foil configured to work in water and an aerofoil refers to a foil configured to work in air.

### Background

At present the use of aerofoils in the field of power generation is known. In particular, flutter aerofoils such as that disclosed in US 9,303,624 and US 2009/285668 are available, where the aerofoil is fixed directly to a cantilever or the like. Movement of air around the aerofoil causes lift which results in the aerofoil moving in a first direction. However, the cantilever is biased against movement - the more the aerofoil is moved in the first direction, the stronger the bias force becomes.

At a certain point, the bias force on the cantilever will overcome the lift on the aerofoil. At this point the movement of the aerofoil will be reversed and the aerofoil will be moved a second direction (opposite the first direction) by the cantilever. As the aerofoil moves in the second direction, the bias force diminishes. Therefore, at a certain point, the lift on the aerofoil will overcome the bias force and the aerofoil will again move in the first direction. In US 9,303,624 this is achieved through the curvature of a sheet inverting. In US2009285668A1 this is achieved using a flexible wing.

As a result, the position of the aerofoil will oscillate. This oscillation can be used to generate electricity either by using a piezoelectric material on a flexible cantilever or through mounting one element of a magnet and coil pair on a moving part and mounting the other part on a stationary part proximate to the moving part - in this case, oscillating movement of the coil relative to the magnet will generate an oscillating current.

For systems of the kind described above, the aerofoil (and the cantilever) must be moved or rotated relative to the direction of air flow such that the movement of the air applies a force to the aerofoil. I.e. the cantilever and the aerofoil must be angled such that the aerofoil functions as a wing. While the aerofoil and cantilever are being moved into this position, the system will either not work or perform sub-optimally.

Another know technology is the use of an aeroelastic wind belt. This uses a strip of elastic placed across an air flow. If the elastic straps are arranged in the same plane as the direction of air flow, then the straps will oscillate due to vortex effects on the strap. A coil and magnet can then be used to convert movement of the elastic strap into electricity. An array of these elastic bands can be provided. And this array must be moved or rotated transverse to the plane of air flow, such that each strap is inline with air flow. While the array is being moved into the correct position, the system will either not be generating electricity or will be performing sub-optimally. Further, there are issues with scaling this system - in particular, scaling the system is problematic as larger elastic strap are required. As the size of the strap is increased, the elastic forces of the strap change and become less conducive to electrical generation.

US 4,354,803 discloses the use of a sail made of dacron, nylon, or canvas.

### Object

There is increasing demand for small generators (i.e. generators which can be fixed proximate to, or on, buildings or located close to the ground or in shallow waters). Existing small generators which generate electricity from a moving fluid can struggle to angle into the changing fluid flow direction caused by turbulence. Thus, these types of generators may not be correctly positioned in the fluid flow long enough to capture useable power from the fluid - as such, small generators have proved to be inefficient.

To extract more energy, it is at present necessary to compensate for this inefficacy by capturing a larger cross-sectional area of the fluid flow. This can be seen in the use of arrays of wind turbines with ever increasing blade sizes (and increasing numbers of turbines n the array). However large turbines are not possible for domestic applications, and further large turbines of this sort can only be located in a location with minimal turbulence - e.g. off shore wind-turbines, and water turbines which require large rivers to be dammed, which are expensive to build and have significant environmental impact.

In addition, each of the present methods of harvesting energy from fluid flow operate optimally in a narrow band of fluid speeds.

A new system is needed that can capture fluid flow energy (e.g. from wind or water currents) without the drawbacks of large turbines.

### Summary

The present disclosure is directed an improved system for harvesting electrical energy from a fluid flow. In particular, the present invention is directed to a system for generating electrical energy from a fluid flow according to claim 1.

In one embodiment, the foil is an aerofoil. In another embodiment, the foil is a hydrofoil.

Preferably, the system further comprises a lever configured to couple the at least one anchor point to the generator. Optionally, the lever is a cantilever. Preferably, the lever is coupled to the resilient member or the lever comprises the resilient member.

Optionally, the system further comprises a bow; the first anchor point is located on the first limb of the bow; the second anchor point is located on the second limb of the bow; and the bow is configured to be coupled to the resilient member and the generator.

Optionally, the first anchor point is located to a fixed point; and the second anchor point is coupled to the resilient member and the generator.

Optionally, the first and second tensile connectors are first and second portions of a single connector connecting the first limb of the bow to the second limb of the bow.

Preferably, the first and second tensile connectors are formed from one or more threads of a material.

Preferably, the tension of at least one of the first and second connectors is adjustable.

Optionally, the bow comprises a semi-rigid but elastic material which is biased against deformation of the bow. Alternatively, the foil is formed of a rigid material.

The present invention is also directed towards a method of generating electricity according to claim 14.

Preferably, coupling at least one anchor point to the resilient member and the generator comprises providing a lever to couple the at least one anchor point to the resilient member and the generator.

Preferably, the lever comprises the resilient member.

### Brief Description

The invention will be more clearly understood from the following description of an embodiment thereof, given by way of example only, with reference to the accompanying drawings, in which:-
Figure 1 is a perspective view of a system in accordance with the present invention; and
Figure 2 is a side view of the system.

### Detailed Description

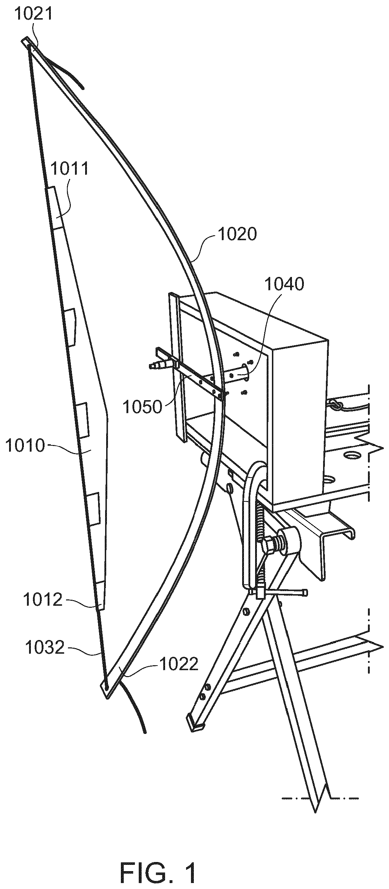

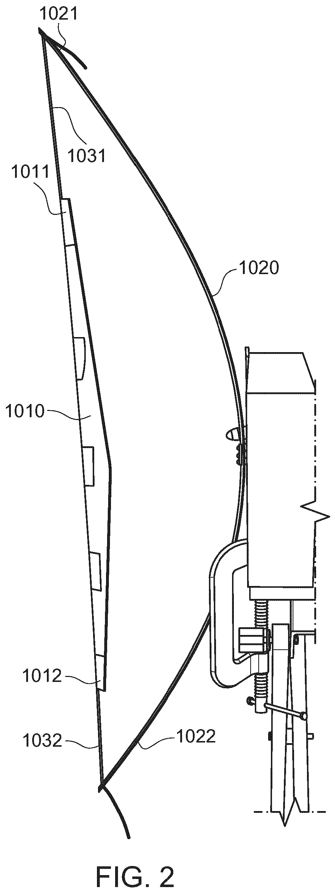

As shown in figures 1 and 2, the system comprises a foil 1010 and a bow 1020. The term 'foil' as used in this disclosure is defined as any structure capable of converting the force from a moving fluid into a motion and includes all suitable sails and foils. The foil 1010 may comprise any suitable fabric or rigid material so long as it holds a shape. For example, the foil 1010 may formed by a fabric held in shape under tension around a rigid frame made of any suitable material. Alternatively, the foil 1010 may be formed from a rigid material. More preferably, the foil 1010 is a foil formed of a lightweight rigid material, for example a composite material such as plastic resin reinforced with a suitable fibre (e.g. fiberglass, carbon fibre, etc).

If the system is configured to harvest energy from air flow, the foil 1010 is preferably an aerofoil. Alternatively, If the system is configured to harvest energy from water flow, the foil 1010 is preferably a hydrofoil.

The foil 1010 has a first end 1011 and an opposing second end 1012. The first end 1011 is preferably connected to a first limb 1021 of the bow 1020 by a first tensile connector 1031. Similarly, the second end 1012 is connected to a second limb 1022 of the bow 1020 by a second tensile connector 1032. Preferably the tensile connectors 1031, 1032 are tensile.

The two limbs 1021, 1022 of the bow 1020 are biased to move away from each other. As a result, the foil 1010 is held in position by the two tensile connectors 1031, 1032 under a tensile force from the bow 1020. Preferably, the two tensile connectors 1031, 1032 are portions of a single connector. For example, one end of the connector can be fixed to a first limb 1021, and the other end of the connector can be fixed to the second limb 1022 such that the connector runs along the long edge of the foil, thereby holding the foil to the bow.

Preferably, the bow comprises a semi-rigid but elastic material which is biased against deformation of the bow. The bow is thus configured such that stringing the bow with the foil 1020 and tensile connectors 1031, 1032 requires the ends of limbs 1021 and 1022 of the bow to be moved into closer proximity to each other. This results in deformation of the semi-rigid but elastic material. As a result, the foil 1010 is held in position under tensile forces applied by the bow 1020 to the foil 1010 via the tensile connectors 1031, 1032.

In use, the foil 1010 is configured to rotate around an axis running between the first 1011 and second 1012 ends of the foil 1010. The foil 1010 is preferably configured such that the area of a first portion of the face of the foil on is greater than the area of a second portion of the face of the foil, where the first and second portions of the foil are divided by the axis running between the first 1011 and second 1012 ends of the foil 1010.

Tensile connectors 1031 and 1032 are formed from one or more threads of any suitable material. For example, tensile connectors 1031 may be formed from one or more of steel, catgut, nylon, linen, plastic, etc. The tensile connectors can be substantively inelastic. Preferably, the tensile connectors 1031, 1032 are flexible. Preferably, the tensile connectors comprise string. The first tensile connector 1031 has a first end attached to the bow and a second end attached to the foil. The second end of the first tensile connector is rotatable around an axis running along the length of the tensile connector. Similarly, the second tensile connector 1032 has a first end attached to the bow and a second end attached to the foil. The second end of the second tensile connector is rotatable around an axis running along the length of the tensile connector. Preferably the second ends of the tensile connectors are rotatable due to the flexibility of the tensile connectors. Thus, the tensile connectors 1031, 1032 allow the foil 1010 to rotate freely.

In use, when the foil 1010 is placed in a flow of fluid, the fluid flow will apply a force in the direction of the fluid flow to the foil 1010. Additionally, the vortexes in the fluid flow around the foil will cause the foil to rotate around the axis running between the first 1011 and second 1012 ends of the foil. As the foil 1010 rotates, a face of the foil 1010 engages with the fluid flow. As the first portion of the face has a greater area that the second portion of the face, the forces applied to the face by the fluid flow will overcome the angular momentum of the foil and reverse the direction of rotation of the foil. Thus, placing the foil 1010 in the fluid flow will cause the foil 1010 to rotatably oscillate around the axis running between the first 1011 and second 1012 ends of the foil 1010.

As foil oscillates, the width of the foil 1010 presented to the fluid flow also oscillates. In particular, the width of the foil 1010 presented to the fluid flow oscillates between a minimum width (when the foil 1010 is parallel to the fluid flow) and a maximum width (when the foil 1010 has rotated to its maximum away from parallel to the fluid flow). Thus, the force applied by the fluid flow to the foil 1010 will oscillate in strength.

The bow 1020 can be mounted on a resilient member and coupled to a generator, for example a linear alternator 1040. Preferably, the resilient member is connected to the centre point along the length of the bow 1020. As a result, the oscillating force applied by the fluid flow can be converted into an oscillating current by the generator.

Preferably, the resilient member is a cantilever 1050. The cantilever is fixed at one end remote from the bow 1020. The linear force applied to the bow 1020 by the fluid flow causes the portion of the cantilever 1050 between the bow 1020 and the fixed end to flex. The magnitude of flex is proportional to the linear force applied to the bow 1020. Thus, the bow will oscillate along an arc defined by the cantilever. The generator is configured to convert this oscillating movement into electrical power.

Alternatively, a hinged leaver fitted with a suitable resilient member (e.g. a spring) can be used instead of a cantilever. In this embodiment, the bow is (or multiple bows are) located at a first end of the lever and a first portion of a generator is on the second end of the lever, wherein the hinge is located between the first and second ends of the lever. The linear force applied to the bow 1020 by the fluid flow causes the first end of the lever will oscillate along an arc defined by the lever. The generator is configured to convert the movement of the lever into electrical power.

Optionally, the tension of the tensile connectors 1031, 1032 is adjustable. For example, the length of one or both of the tensile connectors between the limbs 1021, 1022 of the bow can be adjusted. Alternatively, the biasing force provided by the bow can be adjusted. As rotating the foil will cause forces to be applied to the foil by the fluid, the foil will be displaced causing the tensile connectors 1031, 1032 to flex. Thus, displacement of the foil by the fluid increases the tension of the tensile connectors provides an additional biasing force. As a result, increasing the tension of the tensile connectors 1031, 1032 reduces the magnitude of the rotatory oscillations of the foil and simultaneously increases the frequency of these oscillations.

A fluid flow travelling perpendicular to the length of the foil along a line connecting the foil to the bow provides the most efficient transfer of energy. Nevertheless, locating the foil in a fluid flow of any direction will cause cantilever 1050 to move with substantially the same motion. This makes it particularly suitable to placement on walls.

As will be apparent to those skilled in the art, a system in accordance with the present disclosure does not need bearings or complex gearing to angle into the wind and begin generating electrical power. Further, while the system works best in a steady fluid flow, it adapts easily to efficiently generate electrical power from turbulent fluid flows (e.g. such as wind flows close to ground level or water flows in shallows). The system also works efficiently in a wide range of fluid flows and can harvest electrical energy from windspeeds of over 2 m/s. The system can also be manufactured from a wide range of materials. As a result, a system in accordance with the present disclosure is cheap to produce as well as being robust.

In addition, the system of the present disclosure can be easily scaled because of the use of a foil and one or more connectors. In particular, because the dimensions of the foil and the tension and length of the one or more connectors can all be controlled, it is possible to configure the system to work well with different foil sizes and/or with arrays of foils.

As those of skill in the art will appreciate, and depending on the application at hand, many modifications, substitutions, etc. can be made in and to the present system without departing from the scope of the present invention, as defined in the claims. The materials, components, and configurations described above may all be altered. Other designs of the frame and energy transfer mechanics are possible. For example, the bow does not necessarily need to be flexible it can be a rigid frame. As a further example, the cantilever 1050 can be replaced, as described above, by a lever and pivot. Alternatively, an array of foils could also use flexible soundboard instead of the cantilever. As yet a further example, gearing can be used to drive a rotary generator instead of using a linear alternator.

In addition, the bow may be omitted. For example, one tensile connector may be coupled to a fixed anchor point and the other tensile connector may be coupled to a moveable anchor point that is coupled to a resilient member and the generator. As a result, the position of the moveable anchor point will oscillate as a result of the oscillating force applied by the fluid flow to the foil. This arrangement is particularly suitable for use with a hydrofoil, where the fixed anchor point can be located in a river or sea floor as the moveable anchor point and the generator can be located above water.

In light of this, the scope of the present disclosure should not be limited to that of the particular embodiments illustrated and described in the present disclosure, as they are merely exemplary. Instead, the scope of the present disclosure should be fully commensurate with that of the appended claims and their functional equivalents.

## Claims

1. A system for generating electrical energy from a fluid flow comprising:
a foil (1010), wherein:
a first end (1011) of the foil (1010) is connected to a first anchor point by a first tensile connector (1031), and the second end (1012) of the foil (1010) is connected to a second anchor point by a second tensile connector (1032), and the foil (101) is configured to oscillate in a fluid flow thereby causing the tensile force applied to the anchor points to vary in use, and
at least one anchor point is configured to be coupled to a resilient member and a generator (1040), whereby in use oscillations in the position of the at least one anchor point resulting from the varying tensile force are converted into electricity, wherein:
the system is **characterised by** the foil (1010) being configured to hold its shape.

2. The system of claim 1, wherein the foil (1010) is an aerofoil.

3. The system of claim 1, wherein the foil (1010) is a hydrofoil.

4. The system of any preceding claim, wherein the system further comprises a lever configured to couple the at least one anchor point to the generator (1040).

5. The system of claim 4, wherein the lever is a cantilever (1050).

6. The system of claim 4 or 5, wherein the lever is coupled to the resilient member or the lever comprises the resilient member.

7. The system of any preceding claim, wherein:
the system further comprises a bow (1020);
the first anchor point is located on the first limb (1021) of the bow (1020);
the second anchor point is located on the second limb (1022) of the bow (1020); and
the bow (1020) is configured to be coupled to the resilient member and the generator (1040).

8. The system of any one of claims 1 to 6, wherein:
the first anchor point is located to a fixed point; and
the second anchor point is coupled to the resilient member and the generator (1040).

9. The system of claim 7, wherein the first and second tensile connectors (1031, 1032) are first and second portions of a single connector connecting the first limb (1021) of the bow (1020) to the second limb (1022) of the bow (1020).

10. The system of any preceding claim, wherein the first and second tensile connectors (1031, 1032) are formed from one or more threads of a material.

11. The system of any preceding claim, wherein the tension of at least one of the first and second connectors is adjustable.

12. The system of claim 7, wherein bow (1020) comprises a semi-rigid but elastic material which is biased against deformation of the bow (1020).

13. The system of any preceding claim, wherein the foil (1010) is formed of a rigid material.

14. A method of generating electricity comprising:
providing a foil (1010);
coupling a first end (1011) of the foil (1010) to a first anchor point with a first tensile connector (1031);
coupling a second end (1012) of the foil (1010) to a second anchor point with a second tensile connector (1032);
coupling at least one anchor point to a resilient member and a generator (1040);
placing the foil (1010) in a fluid flow so that the foil oscillates in the fluid flow; and
converting oscillations of the position of the at least one anchor point into electricity;
wherein:
the method is **characterised by** the foil (1010) being configured to hold its shape.

15. The method of claim 14, wherein:
coupling at least one anchor point to the resilient member and the generator (1040) comprises providing a lever to couple the at least one anchor point to the resilient member and the generator; or
the lever comprises the resilient member.

## Patentansprüche

1. System zum Erzeugen elektrischer Energie aus einer Fluidströmung, umfassend:
einen Flügel (1010), wobei:
ein erstes Ende (1011) des Flügels (1010) mit einem ersten Verankerungspunkt durch einen ersten Zugverbinder (1031) verbunden ist und das zweite Ende (1012) des Flügels (1010) mit einem zweiten Verankerungspunkt durch einen zweiten Zugverbinder (1032) verbunden ist und der Flügel (101) dazu konfiguriert ist, in einer Fluidströmung zu oszillieren, wodurch bewirkt wird, dass die auf die Verankerungspunkte aufgebrachte Zugkraft im Gebrauch variiert, und
mindestens ein Verankerungspunkt dazu konfiguriert ist, mit einem elastischen Element und einem Generator (1040) gekoppelt zu sein, wodurch im Gebrauch Oszillationen der Position des mindestens einen Verankerungspunkts, die sich aus der variierenden Zugkraft ergeben, in Elektrizität umgewandelt werden, wobei:
das System **dadurch gekennzeichnet ist, dass** der Flügel (1010) dazu konfiguriert ist, seine Form beizubehalten.

2. System nach Anspruch 1, wobei der Flügel (1010) ein Luft-Flügel ist.

3. System nach Anspruch 1, wobei der Flügel (1010) ein Wasser-Flügel ist.

4. System nach einem vorhergehenden Anspruch, wobei das System ferner einen Hebel umfasst, der dazu konfiguriert ist, den mindestens einen Verankerungspunkt mit dem Generator (1040) zu koppeln.

5. System nach Anspruch 4, wobei der Hebel ein Ausleger (1050) ist.

6. System nach Anspruch 4 oder 5, wobei der Hebel an das elastische Element gekoppelt ist oder der Hebel das elastische Element umfasst.

7. System nach einem vorhergehenden Anspruch, wobei:
das System ferner einen Bogen (1020) umfasst;
der erste Verankerungspunkt sich an dem ersten Teil (1021) des Bogens (1020) befindet;
der zweite Verankerungspunkt sich an dem zweiten Teil (1022) des Bogens (1020) befindet; und
der Bogen (1020) dazu konfiguriert ist, mit dem elastischen Element und dem Generator (1040) gekoppelt zu sein.

8. System nach einem der Ansprüche 1 bis 6, wobei:
der erste Verankerungspunkt sich an einem feststehenden Punkt befindet; und
der zweite Verankerungspunkt mit dem elastischen Element und dem Generator (1040) gekoppelt ist.

9. System nach Anspruch 7, wobei der erste und der zweite Zugverbinder (1031, 1032) ein erster und ein zweiter Abschnitt eines einzelnen Verbinders sind, der den ersten Teil (1021) des Bogens (1020) mit dem zweiten Teil (1022) des Bogens (1020) verbindet.

10. System nach einem vorhergehenden Anspruch, wobei der erste und der zweite Zugverbinder (1031, 1032) aus einem oder mehreren Fäden eines Materials ausgebildet sind.

11. System nach einem vorhergehenden Anspruch, wobei die Spannung mindestens eines von dem ersten und dem zweiten Verbinder einstellbar ist.

12. System nach Anspruch 7, wobei der Bogen (1020) ein halbstarres, aber elastisches Material umfasst, das gegen eine Verformung des Bogens (1020) vorgespannt ist.

13. System nach einem vorhergehenden Anspruch, wobei der Flügel (1010) aus einem starren Material ausgebildet ist.

14. Verfahren zum Erzeugen von Elektrizität, umfassend:
Bereitstellen eines Flügels (1010);
Koppeln eines ersten Endes (1011) des Flügels (1010) an einen ersten Verankerungspunkt mit einem ersten Zugverbinder (1031);
Koppeln eines zweiten Endes (1012) des Flügels (1010) an einen zweiten Verankerungspunkt mit einem zweiten Zugverbinder (1032);
Koppeln mindestens eines Verankerungspunkts mit einem elastischen Element und einem Generator (1040);
Platzieren des Flügels (1010) in einer Fluidströmung, sodass der Flügel in der Fluidströmung oszilliert; und
Umwandeln von Oszillationen der Position des mindestens einen Verankerungspunkts in Elektrizität;
wobei:
das Verfahren **dadurch gekennzeichnet ist, dass** der Flügel (1010) dazu konfiguriert ist, seine Form beizubehalten.

15. Verfahren nach Anspruch 14, wobei:
das Koppeln mindestens eines Verankerungspunkts mit dem elastischen Element und dem Generator (1040) Bereitstellen eines Hebels, um den mindestens einen Verankerungspunkt mit dem elastischen Element und dem Generator zu koppeln, umfasst; oder
der Hebel das elastische Element umfasst.

## Revendications

1. Système de génération d'énergie électrique à partir d'un écoulement de fluide comprenant :
une feuille (1010), dans lequel :
une première extrémité (1011) de la feuille (1010) est reliée à un premier point d'ancrage par un premier élément de liaison de traction (1031), et la seconde extrémité (1012) de la feuille (1010) est reliée à un second point d'ancrage par un second élément de liaison de traction (1032), et la feuille (101) est conçue pour osciller dans un écoulement de fluide, entraînant ainsi une variation de la force de traction appliquée aux points d'ancrage lors de l'utilisation, et
au moins un point d'ancrage est conçu pour être couplé à un élément souple et à un générateur (1040), moyennant quoi, lors de l'utilisation, des oscillations dans la position de l'au moins un point d'ancrage résultant de la force de traction variable sont converties en électricité, dans lequel :
le système est **caractérisé en ce que** la feuille (1010) est conçue pour maintenir sa forme.

2. Système de la revendication 1, dans lequel la feuille (1010) est un profil aérodynamique.

3. Système de la revendication 1, dans lequel la feuille (1010) est une aile portante.

4. Système d'une quelconque revendication précédente, dans lequel le système comprend en outre un levier conçu pour coupler l'au moins un point d'ancrage au générateur (1040).

5. Système de la revendication 4, dans lequel le levier est un porte-à-faux (1050).

6. Système de la revendication 4 ou 5, dans lequel le levier est couplé à l'élément souple ou le levier comprend l'élément souple.

7. Système d'une quelconque revendication précédente, dans lequel :
le système comprend en outre un arc (1020) ;
le premier point d'ancrage est situé sur le premier membre (1021) de l'arc (1020) ;
le second point d'ancrage est situé sur le second membre (1022) de l'arc (1020) ; et
l'arc (1020) est conçu pour être couplé à l'élément souple et au générateur (1040).

8. Système de l'une quelconque des revendications 1 à 6, dans lequel :
le premier point d'ancrage est situé sur un point fixe ; et
le second point d'ancrage est couplé à l'élément souple et au générateur (1040).

9. Système de la revendication 7, dans lequel les premier et second éléments de liaison de traction (1031, 1032) sont de première et seconde parties d'un seul élément de liaison reliant le premier membre (1021) de l'arc (1020) au second membre (1022) de l'arc (1020).

10. Système d'une quelconque revendication précédente, dans lequel les premiers et seconds éléments de liaison de traction (1031, 1032) sont formés à partir d'un ou de plusieurs filets d'un matériau.

11. Système d'une quelconque revendication précédente, dans lequel la tension d'au moins un des premier et second éléments de liaison est réglable.

12. Système de la revendication 7, dans lequel l'arc (1020) comprend un matériau semi-rigide mais élastique qui est sollicité contre une déformation de l'arc (1020).

13. Système d'une quelconque revendication précédente, dans lequel la feuille (1010) est formée d'un matériau rigide.

14. Procédé de génération d'électricité comprenant :
la fourniture d'une feuille (1010) ;
le couplage d'une première extrémité (1011) de la feuille (1010) à un premier point d'ancrage avec un premier élément de liaison de traction (1031) ;
le coupage d'une seconde extrémité (1012) de la feuille (1010) à un second point d'ancrage avec un second élément de liaison de traction (1032) ;
le couplage d'au moins un point d'ancrage à un élément souple et à un générateur (1040) ;
le placement de la feuille (1010) dans un écoulement de fluide afin que la feuille oscille dans l'écoulement de fluide ; et
la conversion des oscillations de la position de l'au moins un point d'ancrage en électricité ;
dans lequel :
le procédé est **caractérisé en ce que** la feuille (1010) est conçue pour maintenir sa forme.

15. Procédé de la revendication 14, dans lequel :
le couplage d'au moins un point d'ancrage à l'élément souple et au générateur (1040) comprend la fourniture d'un levier pour coupler l'au moins un point d'ancrage à l'élément souple et au générateur ; ou
le levier comprend l'élément souple.
